# EUROPEAN PATENT APPLICATION

(11) **EP 1 402 964 A1**
(43) Date of publication of application: **31.03.2004**
(21) Application number: 02256629.3
(22) Date of filing: 24.09.2002
(51) Int. Cl.: B09B 3/00, B09C 1/08

(54) **Methodology for the treatment of tarry wastes and residues**

(71) Applicant: McLeod, Neil, Kingswinford, West Midlands DY6 9QH (GB)
(72) Inventor: McLeod, Neil, Kingswinford, West Midlands DY6 9QH (GB)

(57) **Abstract**

The invention provides a methodology for treating tarry wastes and residues, both acidic and alkaline in nature. Modified clays are used in combination with cementitious materials to provide an advanced chemical and physical stabilisation process, thereby reducing the environmental impact of the tarry waste materials. The invention also resides in a process for treating contaminated leachate and groundwater, arising from or in association with the tarry waste materials and residues, using modified clays in isolation.

## Description

### Description of the Invention

This invention relates to the chemical and physical stabilisation of tarry waste material and the treatment of associated pollutants arising from the said waste material. This treatment may be by direct stabilisation of the waste itself or by treatment of soil or water contaminated by the waste. In some cases, the invention can be applied to the combined treatment of the waste and the treatment of contaminated soil and water.

### Background to Invention and Prior Art

A process known as the destructive distillation of coal was commonplace in the UK prior to the discovery of North Sea gas and oil reserves in the 1970's since it produced *inter alia* a number of useful products namely coal gas (50 % H₂ + CO, CH₄ *etc*.), coal tar (a tarry residue which was a source of creosote, pitch, naphthalene - used for moth balls, phenol, dyes etc.), ammoniacal liquor (an aqueous by-product which was a source of NH₃ for fertilisers) and coke (solid residue used for fuels). The coal was heated to high temperatures in large towers (retorts) but not allowed to bum since no air was admitted into the chamber; therefore the more volatile parts of the coal were driven out to produce the aforementioned products. However, coal became more expensive to mine and a method of producing town gas from oil using a catalyst was developed (and natural resources were exploited). The coal tar was a complex mixture of organic compounds, some of which were useful, as stated, and also included benzene, toluene, xylenes *etc*. but a considerable portion was simply a tarry residue which contained *inter alia* polycyclic aromatic hydrocarbons (PAH's). The constituents of this chemical cocktail which could not be readily utilised were frequently disposed of in designated sites as a legacy of this industrial process.

One of the lighter fractions of tarry material derived from coal in the carbonisation process was crude benzole which contained a desirable benzene, toluene and xylene (BTX) fraction. One of the processes which is known to have produced acid tars is the refining of this fraction to produce a purified BTX fraction. In order to produce this purified product, the crude product was washed with concentrated sulfuric acid in order to sulfonate the undesirable by-products preferentially to facilitate separation and removal.

Another process known as oil refining also produced acid tars via the regeneration of spent lubricants for either direct re-use or for re-use in a different role e.g. the base stock for blending with fresh oils. Dissolved impurities such as lead, zinc or manganese may be removed in the treatment process, as may the unsaturated hydrocarbons and sulfur-containing compounds via treatment with concentrated sulfuric acid. Clay (Fullers earth) was often added as a filter-aid at this stage of purification as it was used to absorb acid, sludge and any remaining solid material following acid treatment. Thus, this type of spent clay is often associated with acid tar wastes.

White oil production is the another common pathway to acid tar production since the refining of petroleum fractions to the level necessary for the production of colourless, odourless oils used for medicinal purposes requires treatment with concentrated sulfuric acid. This is one of the most efficient means of desulfurising and decolourising the petroleum fractions but produces a highly acidic tarry residue as a by-product. The acid tars arising from this particular process tend to be very thick, acrid and noxious, and tend to be of a more hazardous nature than those arising from benzole refining or oil re-refining.

Previously it has been the practice to dispose of tarry wastes, residues and associated contaminated materials in repositories or landfill sites. These repositories have been commonly used to dispose of other contaminated wastes and pollutants, resulting in significant cross-contamination and interaction of the wastes.

There are known examples of repositories which have been used to dispose of significant volumes of toxic and hazardous wastes in addition to tarry wastes, thereby creating tarry wastes with inherent properties associated with the interaction of the toxic and hazardous wastes with the tars / tarry residues.

There are known examples of repositories which have been used to dispose of significant volumes of toxic and hazardous wastes in addition to acid tarry wastes, thereby creating tarry wastes with inherent properties associated with the interaction of the toxic and hazardous wastes with the acid tars / tarry residues.

There are also known examples of repositories which have been used to dispose of significant volumes of alkaline wastes in addition to tarry wastes, thereby creating alkaline tarry wastes with inherent properties associated with the interaction of the alkaline material and tars / tarry residues.

The historical legacy of land contamination arising from deposition of tarry wastes, whether cross-contaminated with other toxic materials or not, is acknowledged to be a world-wide problem, with known waste repositories in the United Kingdom, the United States and Europe.

There is an increasing need to implement cost-effective solutions to the remcdiation and regeneration of contaminated land. For example, the United Kingdom Environment Agency have stated, "We would like to confirm that the Agency is fully committed to encouraging and supporting the remcdiation of contaminated land, and we include this within our key annual targets. Furthermore, we are keen to see on-site remediation solutions being adopted, where appropriate, as opposed to the traditional approach of off-site disposal of contaminated soils to landfill."

Historically, acidic and alkaline tar lagoons have been difficult to treat using conventional remediation technologies. This is due to the toxic nature and complex physical properties of the waste. Acidic tars in particular have been extremely problematical to treat due to the high levels of acidity within the waste. Disposal options, such as landfilling or incineration arc impractical and prohibitively expensive, and the production of volatile organic compounds (VOCs) during excavation of the tarry material is of particular concern. Furthermore, transportation of the waste through local settlements is also of concern. Notwithstanding these issues, disposal of acidic and alkaline tarry wastes in landfills is not intended to be the best practicable environmental option, since there is a proven potential for long term problems (United Kingdom Department of the Environment, 1986).¹ Therefore, in order to provide an effective remedial approach for the treatment of tarry wastes, it has become necessary to formulate an innovative methodology as a solution to the problem.

One technique which has been previously employed for the treatment of tarry wastes is physical stabilisation/solidification. This involves the use of cementitious or pozzolanic additives to improve the physical characteristics of the waste. These additives do not have the capability to effectively reduce the leachability of pollutants contained within the tarry wastes, in particular organic pollutants with high leaching potential such as BTX, phenolic compounds and small-ring PAH's. As such, these processes are not considered satisfactory in terms of long-term effectiveness which is essential to obtain regulatory approval for the process. It is therefore necessary to demonstrate chemical and physical stabilisation of the tarry waste to minimise environmental impact.

There are known examples of physical stabilisation processes being employed for the treatment of tarry wastes with limited success. There have been previous claims made regarding treatment to produce materials of enhanced physical characteristics though each of these appears to have related disadvantages. For example, a process previously promoted¹ which appeared to produce a satisfactorily stable product involved the use of prohibitively high bulking factors e.g. 580 kg of additives required to stabilise 25 kg of acid tar (a bulking ratio of 1:23). It was stated that acid tar incorporation rates could be increased to a maximum of 30 % but this still involves a bulking factor of more than 200 %, which, where large quantities of acid tar are involved, could exacerbate the disposal problem. The addition of large volumes of bulking agents will be prohibitive when treating significant volumes of tarry wastes and will not be conducive to the underlying principle of disposing of the waste material in an efficient and cost effective manner.

The dispersal by chemical reaction (DCR) process was developed in the early 1970's and has been used for the treatment of oils and oily waste materials. US Patent 4018679 describes a process for treating oily waste material using an alkaline earth metal oxide (preferably quicklime) pretreated with a surfactant rendering the said metal oxide hydrophobic, then mixing with the oily waste material and subsequently with water in stoichiometric amounts to produce the corresponding hydroxide (preferably calcium hydroxide) creating a dispersion of the oil within the hydroxide. US patent 4350598 describes a similar process ultimately producing a dust dry, substantially uniform distribution of said oil in the hydroxide. Whilst the process is not stabilisation in the practiced art, the treated material is produced using pozzolanic materials and can be used to produce a stabilised mass by subsequent compaction techniques. The disadvantages of this process are (i) the process is not suitable for tarry materials which do not facilitate application of dispersion techniques due to their cohesive nature (increased viscosity) (ii) the process is designed to promote physical dispersion of the oils / oily waste material as a consequence of the chemical reaction of lime with water and there is no direct treatment of the oil itself (iii) the process preferably uses lime which can generate production of undesirable gases and odours due to the exothermic reaction of quicklime with water to produce slaked lime and (iv) the process results in the production of hydrophobic particles which are not in themselves effective for the treatment of polar organic molecular species such as phenolic compounds, commonly present in tarry residues.

The Gesellshaft fur Flugaschenverwertung und Schadstoffbeseitigung (GFS) solidification process developed in Germany in the mid-1970's has been described as applicable for the treatment of acid tar residues. The process requires the addition of fly ash and bonding agents to produce a solid alkaline matrix. The first stage in this process is to neutralise the acid content of the tar with lime and the second stage involves the combination of the neutralised product within a high density matrix using proprietary GFS hydraulic binders and fly ash, as necessary. However, it again appears that the proportion of additives necessary to produce a stable product is restrictively high. In addition, the process is effectively a physical stabilisation technique using pozzolanic additives with limited reactivity with the tar itself and the chemical constituents contained within the tarry residues.

The Ravenfield Quarry in South Yorkshire, United Kingdom (UK) offers an example of a previous attempt of the remediation of an acid tar lagoon in the UK using neutralisation techniques only. The process involved treating the acid tar and contaminated Fullers earth with quicklime to effect neutralisation in proportions varying from 1:4 to 1:10, depending upon local acidity. The 'treated' material was then deposited in a nearby empty quarry. On top of the treated material a 15 to 23 cm thick layer of 2.5 cm grade limestone chips was spread and then covered with soil and subsoil. The whole area was then finished so that no treated material was less than 1.2 m from the surface. This process was carried out over 20 years ago and it would not be acceptable to utilise a neutralisation process in isolation to satisfy current regulatory requirements in terms of environmental impact. It would now be necessary to demonstrate both chemical and physical stabilisation of the tarry waste to satisfy current regulatory requirements. In addition, it would not be considered acceptable to transfer the waste after minimal treatment, as was the case with this remediation strategy. As with the aforementioned stabilisation techniques, a significant bulking factor was utilised to achieve the remediation objective, which would be impractical for the treatment of significant volumes of tarry waste and would also be prohibitively expensive.

Located in the United States of America (USA), The Sand Springs Petrochemical Complex, Tulsa Oklahoma, is another well-documented site of tar remediation works given that a portion of this site was added to the United States Environmental Protection Agency Superfund National Priorities List in 1986. In order to control the source of contamination on-site, a Record of Decision (ROD) was issued in 1987 and, in 1991, a chemical stabilisation and solidification field demonstration was undertaken. As a consequence of this, a quicklime-based process was developed to treat sites of this nature.

This process of treatment of the acid tars with lime has been practiced on a number of occasions but offers little in the way of enhanced chemical and physical properties since the acid fraction of the tar is merely neutralised without significant alteration of the chemical properties of the tar. A simplistic method of treatment of acid tars using a bulk neutralising agent utilises a passive treatment process. For example, distributing the treatment agent across the tar and allowing it to sink through the tar, as described in US patent 5814206, is a typical example of this basic treatment process which offers a minimal change in the chemical properties of the tar, other than those associated with the neutralisation process.

Other previously proposed methods of remediation for tarry wastes include the blending of the tar with coke to reduce the bioavailability of the tar. US patent 5587324 describes such a method. However, the necessary addition rates of coke can be restrictively high to be practical in most situations. In addition, this technique offers little regarding chemical stabilisation of the tar.

US patent 5849201 describes a method for chemically oxidising the type of aromatic hydrocarbons contained within tarry wastes using catalysts in conjunction with ozone, oxidants and surfactants has also been suggested. However, it is proposed that this method of remediation would be impractical for many sites containing tarry wastes and in particular acid tars. In addition, the range of chemicals generated from the oxidation process may also be undesirable, probably requiring further remediation to minimise environmental impact.

The aforementioned patents and treatment methodologies describe predominantly physical stabilisation processes for treating tarry wastes and in particular acid tars. This prior art has identified disadvantages in achieving the current requirements for environmental acceptability both in terms of meeting regulatory requirements and minimising environmental impact. In addition, the stabilisation techniques hereto mentioned describe processes requiring significant bulking factors, limiting the commercial applicability and practical implementation of the process.

The invention as taught herein describes an advanced stabilisation technique incorporating specialist additives which provide a chemical stabilisation capability in addition to physical stabilisation. The use of said additives enables the stabilisation process to be employed using acceptable bulking factors. The process is designed to address concerns with compliance issues relating to regulatory requirements and to minimise environmental impact.

According to a first aspect of the invention, we provide a process for treating tarry waste materials and residues which utilises a chemical and physical stabilisation process whereby the said waste material is stabilised using a treatment agent(s) which is selected according to the nature of the tarry waste material undergoing treatment to produce a treated material with improved physical and chemical properties so as to reduce the environmental impact of the material.

The process as taught in the invention can be applied to both the acidic and alkaline core tarry material and contaminants arising from, or in addition to, the core material. The treatment agent(s) employed can include active materials selected to react with the contaminants contained within the tarry waste material, said active materials being added to neutralise or destroy the contaminant. These additive materials are typically modified clays and most preferably reactive modified smectite clays as described in UK Patent GB 2302685, USA Patent 5827362, European Patent Application 96307987.6 and Australian Patent 727587. The modified clays as described in these patents are referred to as E-clays®.

By selective use of treatment agents it is possible to facilitate effective chemical and physical stabilisation using, where appropriate, binding agents in addition to active materials. The process can be employed to utilise one or more active materials selected to react with the contaminant(s) so as to neutralise or destroy the contaminant(s) and one or more binding materials to bind the contaminant(s) and mitigate or prevent physical migration thereof.

In situations where contaminated leachate cannot be satisfactorily addressed by the stabilisation technology alone, a process can be employed where the contaminants arising from, or in addition to, the core material are treated by the installation of a reactive barrier system and most preferably, a reactive barrier system as described in UK Patent GB 2301133 B.

Binder systems as mentioned above will typically comprise cementitious or pozzolanic materials which provide enhanced physical stabilisation to the treated tarry waste material. As stated previously, they cannot be used in isolation to achieve the requisite objectives of the invention as they are predominantly designed to engender physical stabilisation characteristics and have limited chemical stabilisation capabilities. Such binder systems which can be used in conjunction with the active materials include Ordinary Portland Cement (OPC), calcium aluminosulfate cements and other cements with variable curing rates and in particular rapid setting, typically with a low gypsum content. The invention can be employed with the use of other binding agents including aggregate materials such as colliery spoil.

The invention is further described hereinafter with reference to treatment trials demonstrating chemical and physical stabilisation of the tarry waste materials.

### Laboratory Treatment Trials

### 1. Treatment Trials of Acidic Tarry Waste

The following trials were carried out on acidic tarry waste material, historically deposited in a former clay pit. The clay pit is relatively impermeable and serves as a repository for the waste material - this scenario may be viewed as typical for many such sites. In this case, and typically, the waste consists of an acid sludge, spent clays (i.e. Fullers Earth containing absorbed heavy oil) and numerous chemical drums of unknown origin and content. The acid tar ranged in pH from 1.4 to 4.0, whilst the contaminated bentonite had a pH value ranging between 4.8 and 8.3. The tar itself is relatively inert. Notwithstanding the inert properties of the core tarry waste material, the presence of potentially mobile and toxic pollutants within the waste material, including tar breakdown products and contaminants arising from, or in addition to the core material, engenders a high capacity for the waste material itself to continually generate a toxic and highly mobilc leachate containing priority pollutants.

The initial treatment trials incorporated modified clays, in addition to binding agents including cementitious materials. These modified clays were designed to be pillared inorgano-organo clays as described in UK Patent GB 2302685, USA Patent 5827362, European Patent Application 96307987.6 and Australian Patent 727587. The treatment process was an advanced chemical stabilisation technique incorporating binder additives to engender improved physical properties. The trials were performed on both tar and bentonite samples. The United Kingdom National Rivers Authority (NRA) modified leaching test protocol was utilised for validation purposes. This test fundamentally involved leaching 100 g of stabilised sample with 1000 ml of deionised water with gentle agitation over a 24 hour period. The resulting solution was then filtered using 0.45 µm filter paper and subsequent storage and analysis carried out as appropriate. The results of this analysis are as shown in Table 1.

**Table 1:**

| Leachate Results for Stabilised Tarry Waste Material Samples | | | | | |
|---|---|---|---|---|---|
| Analyte (mg/l) | Control Leachate | Stabilised Tar Sample (Leachate) | % Removal | Stabilised Bentonite Sample (Leachate) | % Removal |
| | | | | | |
| Arsenic | 0.025 | <0.005 | >80 | <0.005 | >80 |
| Cadmium | 0.007 | 0.001 | 86 | 0.002 | 71 |
| Chromium | 0.36 | 0.02 | 94 | 0.18 | 50 |
| Copper | 0.47 | 0.14 | 70 | 0.11 | 77 |
| Lead | 0.15 | <0.05 | >67 | <0.05 | >67 |
| Nickel | 0.54 | 0.06 | 89 | 0.07 | 87 |
| Zinc | 2.6 | 0.18 | 93 | 0.16 | 94 |
| Iron | 172 | 0.23 | 99.9 | 0.03 | 99.9 |
| Manganese | 2.9 | 0.06 | 98 | 0.11 | 96 |
| | | | | | |
| Total Heavy Metals* | 179.05 | 0.746 | 99.58 | 0.717 | 99.60 |
| | | | | | |
| Cyanide | <0.05 | <0.05 | 100 | <0.05 | 100 |
| Sulfate | N/A | 2,770 | - | 1,860 | - |
| Phenol | 0.05 | <0.05 | 100 | <0.05 | 100 |
| TPH† | 562.89 | 2.39 | 99.5 | 3.40 | 99.4 |

| | | | | | |
|---|---|---|---|---|---|
| ^{†}Total Petroleum Hydrocarbons | | | | | |
| *Sum of the values for arsenic, cadmium, chromium, copper, lead, nickel, zinc, iron and manganese | | | | | |

It is considered normal practice to aim for a minimum target value of 90 % leachate contaminant concentrations, and ideally a 95 % removal rate, in order to reduce the environmental impact to acceptable levels.

Overall removal rates for total heavy metals significantly exceeded the ideal 95 % removal rate and were considered satisfactory.

Organic pollutants are of significant concern as they are relatively mobile with the potential to have serious environmental impact. It is evident from the above results that the prime pollutants of concern are Total Petroleum Hydrocarbons (TPH) i.e. those hydrocarbons falling within the C₆ to C₄₀ range, which encompass a broad range of both oil and water soluble organic pollutants. Removal rates for TPH significantly exceeded the ideal 95 % removal rate.

Further testing was carried out on samples taken from varying depths as it was noted that the tarry material varied considerably in physical properties and chemical composition with depth. It was also decided to focus subsequent leachate testing on TPH as the tars at depth had the propensity to leach organic pollutants in particular due to entrapped lenses of hydrocarbons encapsulated within this material which, at shallower depths, would have volatilised more readily. In addition, the tar is known to settle with time and the denser, more viscous tars (often including harder crystalline material) are typically observed at greater depths and conversely the more fluid tars are found at shallower depths.

**Table 2:**

| **TPH Results for Leached Samples from varying depths.** | | | |
|---|---|---|---|
| Sample Code | Sample Position (Depth) | Total Petroleum Hydrocarbons (µg/l) | % Removal Rate |
| | | | |
| Control (Untreated Leachate) | | 562,890 | |
| | | | |
| * | 1,-2,000mm | 6,940 | 98.8 |
| * | 1,-2,000mm | 2,760 | 99.5 |
| * | 4,000mm | 3,260 | 99.4 |

The results showed a substantial reduction in TPH for the samples stabilised at varying depths, achieving higher removal rates than the 95 % ideal target level.

In summary, the results achieved demonstrate the efficacy of the treatment approach for the successful chemical immobilisation of the identified pollutants within the tar waste.

Treatment trials were subsequently carried out on pollutants arising from, or in addition to, the core tarry waste material. These pollutants have the potential to migrate to the periphery of the repository and thereby potentially can have significant environmental impact. A barrier system is therefore necessary to address this potential hazard and, in particular, a reactive barrier which is also porous. Pillared modified clays and most particularly those described in UK Patent GB 2302685, USA Patent 5827362, European Patent Application 96307987.6 and Australian Patent 727587 are commonly utilised in these barrier systems to achieve the dual requirement of induced porosity and reactivity. These clays would be installed in the ground to form reactive barriers as described in UK Patent GB 2301133 B.

The efficacy of the barrier system was evaluated by carrying out a number of treatment trials. Whereas the core treatment approach aims to address the potential environmental impact of solid tarry material, the barrier system aims to address the potential environmental impact of migrating polluted ground water and leachate. Both approaches can be implemented synergistically or can be used in isolation.

A control leachate was produced from combining all tar sample leachates (1:1, water:solid solution). This 'stock leachate solution' is intended to mimic the conditions, which may materialise as a consequence of the tar wastes contacting water, thereby generating a contaminated leachate. This leachate has the potential to migrate off-site and is therefore a potential pollution risk. The sample of stock leachate solution was substantially more contaminated than the actual ground water on site and therefore represents a worst case scenario for determining the suitability of the modified clays in the proposed reactive barrier system. The results from direct treatment of the stock leachate solution, using the optimum modified pillared clay designed for the reactive barrier system are as shown in Table 3.

**Table 3:**

| Treatment of Leachate Utilising Modified Pillared Clays | | |
|---|---|---|
| Analyte (mg/l) | Control | Test |
| | | |
| Arsenic | 0.025 | N/A |
| Cadmium | 0.007 | 0.010 |
| Chromium | 0.36 | 0.08 |
| Copper | 0.47 | 0.73 |
| Lead | 0.15 | 0.13 |
| Nickel | 0.54 | 1.5 |
| Zinc | 2.6 | 1.3 |
| Iron | 172 | 36 |
| Manganese | 2.9 | 0.90 |
| | | |
| Total Heavy Metals* | 179.052 | 40.65 |
| | | |
| Cyanide | <0.05 | N/A |
| Sulfate | N/A | 800 |
| Phenol | 0.05 | N/A |
| TPH† | 562.89 | 7.87 |

| | | |
|---|---|---|
| ^{†}Total Petroleum Hydrocarbons | | |
| *Sum of the values for arsenic, cadmium, chromium, copper, lead, nickel, zinc, iron, and manganese. | | |

The results provided above illustrate the level of efficiency achieved from the interaction of the modified clays with a range of pollutants, both inorganic and organic in nature. These modified clays incorporate intercalated moieties in order to provide an effective mechanism for attracting pollutant molecules into the interlamellar spaces in close proximity to other intercalated reactants which may chemically stabilise (immobilise) the pollutants via a range of chemical interactions. In a barrier system such as that described in UK Patent GB 2301133 B, this level of chemical immobilisation has been shown to be sufficient to reduce migration of the pollutants from the area of contamination. Otherwise, in a mass treatment approach, binders may be added to the modified clay formulation in order to promote physical stabilisation of the mass. In such a scenario, the modified clays are present in order to facilitate the cement hydration reactions to proceed as necessary to produce a physically stable monolith. This has increased strength and decreased leachability with respect to the initial pollutant matrix.

The physical properties of the material are of importance for reasons as previously described. Treatment trials designed to evaluate the improved physical properties were carried out in addition to the chemical testing protocol described hereinbefore. Unconfined compressive strength (UCS) testing was carried out to determine the structural integrity and projected stress load of the stabilised material.

The test protocol was in accordance with accepted methods commonly used for other applications. The sample mix was placed in a PVC mould, ensuring that as little air as possible was trapped in with the mix. The mould was filled to the top with the mix and levelled. The mould's dimensions are nominally 71 mm in diameter and 142 mm high, which is the standard ratio for UCS tests giving a height to diameter ratio of 2:1. The stabilised mix was then left to cure for a period of 28 days. Once cured, a vertical slit down one side of the mould facilitated easy extraction of the sample from the mould. A vertical load was applied to the top of the sample via a loading ram at a rate of 1 mm/min using a triaxial testing machine. The load was applied through a proving ring and monitored by a dial gauge throughout the test. When the sample buckled and could no longer support the application of further loading, the sample was deemed to have failed. The value of the load at the point of failure was then divided by the cross-sectional area of the sample to give a value for UCS.

UCS tests are generally used as an indicator of the effectiveness of stabilisation/solidification (S/S) technologies. The term 'unconfined', refers to the sample which is not constrained horizontally during the test i.e. there is no horizontal loading applied to the sample. This is particularly relevant for tarry waste materials, or repositories containing tarry wastes, where there is a propensity for the tar to move laterally under vertical pressure. Once fully treated, the stabilised mass will be constrained horizontally (by the rest of the treated mass) and under these circumstances, it is a reasonable assumption that the treated mass would have a greater ability to support vertical loading than demonstrated by this test. In addition, physical property tests were carried out in relation to hydraulic conductivity or permeability of the treated mass. In this respect samples were taken from the cured samples and tested in accordance with the standard specification i.e. ASTM D2434.

The sample preparation stage for the permeability test was identical as to that utilised for the UCS test described above. Once the stabilised samples had cured for the 28-day period, porous disks were placed at both ends of the sample. A cell pressure of 300 kN/m² was applied and then the sample was left for a period of 24 hours to reach equilibrium. Following this, the drainage taps were opened and the sample was left to consolidate for a further 24 hours. A constant flow rate was then introduced at the base of the sample producing an upward vertical flow of water through the sample via the use of a flow pump. Readings of the pore water pressure were taken at the inflow position using a pore pressure transducer. The pore water pressure within the sample was not allowed to exceed 20 % of the cell pressure itself. Similar hydraulic gradients were employed in all of the tests. Once the pore water pressure reached equilibrium, the vertical permeability was calculated using Darcy's law.

To obtain a comparative overview of the permeability of the treated material, samples were chosen which reflected low, medium and high UCS values. Target levels for the physical properties of the ground after stabilisation reflect future land-use, which can vary considerably, ranging from landscaping or similar to industrial / retail or residential development. A UCS target value of 80 kN/m² was considered acceptable as this is the value normally required for residential developments. The results were based on average results obtained from duplicate samples tested following physical and chemical stabilisation trials incorporating the optimum combination of binders and modified clays as described hereinbefore.

**Table 4:**

| **Representative Results Illustrating UCS and Permeability** | | |
|---|---|---|
| Sample Reference | UCS value (kN/m²) | Permeability (m/s) |
| | | |
| * | 125 | |
| * | 102 | 8 x 10⁻⁸ |
| * | 203 | |
| * | 414 | 4 x 10⁻⁸ |
| * | 274 | |
| * | 180 | |
| * | 164 | |
| * | 164 | |
| * | 656 | 1.5 x 10⁻⁸ |
| * | 344 | |

The UCS results achieved well in excess of the target value. These results support the aims of improved chemical and physical stabilisation incorporating modified clays and binder additives, taking into account the fact that the tar material itself has varying rheological properties. All samples tested illustrated substantial improvements in UCS values following chemical and physical stabilisation. The tarry waste material itself had no integral strength and could not be tested using the standard protocol.

Having identified respective UCS values, selected samples were subsequently tested for hydraulic conductivity / permeability. These samples covered the full range of physical stabilisation in terms of UCS values. Target values for permeability were stipulated to be no greater than a figure of *ca*. 1x10⁻⁷ m/s. All of the samples achieved acceptable permeability levels.

Advanced testing of materials to be used in the stabilisation mixture with respect to optimisation of the mix formulation was carried out with the objective of further demonstrating the capabilities of the invention. The effects of a range of cementitious binders was investigated and the effects on the physical properties of the stabilised mass noted. In addition, the use of binder materials was also investigated, with the aim of further improving the physical properties of the treated material. The UCS of the treated mass was used as an indicator of the success of the stabilisation process.

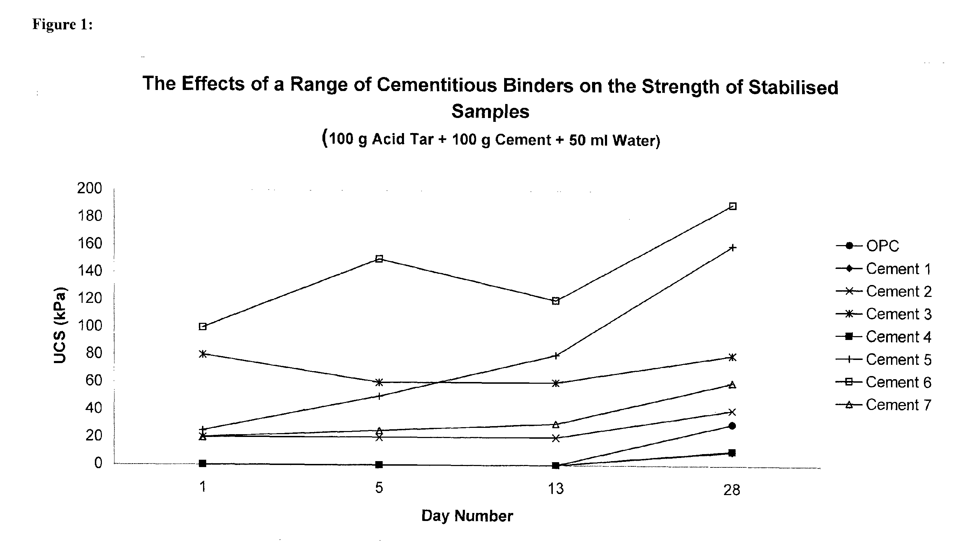

A summary of the effects of a range of cementitious binders on the strength of treated samples may be seen in Figure 1. This Figure illustrates the significance of the cement type selected for physical stabilisation of the tarry waste. It should be noted that the addition rates for cement are higher than would be practically employed in order to obtain measurable UCS results within a 28 day time period. As shown, the level of strength achieved by the use of Ordinary Portland Cement (OPC) may be significantly improved with the use of cements with enhanced chemical and physical properties. Cementitious binders showing favourable results were shown to be calcium sulfoaluminates and rapid-setting low gypsum cements.

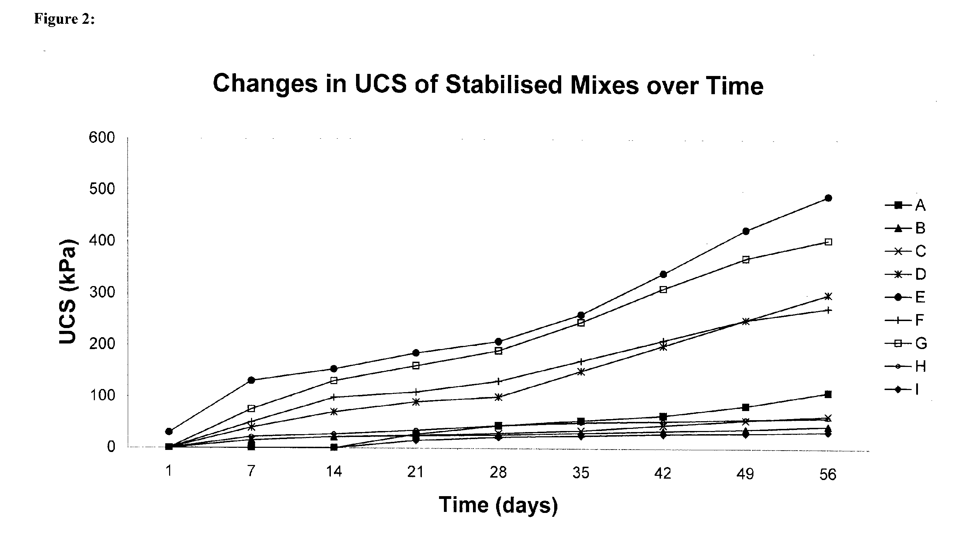

The use of an additional binder material also increased the physical stability of the treated material. The prime objective is to utilise a binder which is viewed as a waste material in itself, one such material being colliery spoil. The effects of the addition of colliery spoil were investigated and indicated that a proportional increase in strength of the treated material with increased proportions of the binder was achieved. The necessary addition rate was shown to be variable according to the initial physical and chemical state of the tarry waste to be stabilised; increased proportions of the binder being necessary with decreasing viscosity of the tar. For the more fluid tars, which were considered to be the worst case scenario in terms of treatability, addition rates of up to a maximum of 1:1 tar : colliery spoil were necessary. It should be noted that the use of binders enabled the proportion of cementitious material to be reduced without a significant change in strength characteristics. The UCS values obtained are tabulated in Table 5 and the rates of curing are illustrated in Figure 2.

**Table 5:**

| **Range of UCS Values (kN/m**^{**2**}**) Recorded for Stabilised Acid Tar Samples** | | | | | | | | | |
|---|---|---|---|---|---|---|---|---|---|
| Time (days) | Mix A | Mix B | Mix C | Mix D | Mix E | Mix F | Mix G | Mix H | Mix I |
| 1 | 0 | 0 | 0 | 0 | 30 | 0 | 0 | 0 | 0 |
| 7 | 0 | 15 | 15 | 40 | 130 | 50 | 75 | 22 | 0 |
| 14 | 0 | 22 | 22 | 70 | 153 | 98 | 130 | 27 | 0 |
| 21 | 27 | 24 | 25 | 90 | 185 | 109 | 160 | 35 | 15 |
| 28 | 44 | 26 | 29 | 100 | 208 | 130 | 190 | 44 | 22 |
| 35 | 54 | 30 | 35 | 150 | 260 | 170 | 245 | 50 | 25 |
| 42 | 64 | 34 | 45 | 200 | 340 | 210 | 310 | 53 | 28 |
| 49 | 83 | 38 | 55 | 250 | 425 | 250 | 370 | 57 | 30 |
| 56 | 110 | 44 | 64 | 300 | 490 | 273 | 405 | 60 | 33 |

### 2. Treatment Trials of Alkaline Tarry Waste

The following trials were carried out on alkaline tarry waste material, historically deposited in an engineered lagoon. Whilst the tar material itself was derived from coal carbonisation, other processes and activities were carried out on-site including significant production of alkaline commodities resulting in significant co-deposits in the lagoon of associated alkaline waste. The tarry waste material is therefore of a highly alkaline nature wherein the waste material comprises the core tar material and contaminants arising from, or in addition to, the core material.

The alkaline tarry material contained within the lagoon consists of silty clay sediments, inter-bedded with lime slurry and coal and coke deposits which have been contaminated with between 10-15 % tar. The tar contains high levels of total petroleum hydrocarbons (TPH), polycyclic aromatic hydrocarbons (PAH's), phenols and benzene, toluene, ethylbenzene and xylenes (BTEX) at % concentrations. Treatment stabilisation trials have been carried out on samples taken from the lagoon using predetermined mixes containing cementitious materials and modified inorgano-organo clays (E-clays®). The objective was to demonstrate both effective chemical and physical stabilisation of the treated tarry material.

Leachate trials were carried out to demonstrate effective chemical stabilisation (immobilisation) of the target pollutants of concern. The results are as shown in Table 6.

**Table 6:**

| Leachate Results for Stabilised Tarry Waste Material Samples | | | |
|---|---|---|---|
| Analyte (µg/l) | Untreated | Treated | % Removal Rate |
| | | | |
| Arsenic | 8.9 | <1.0 | >88.8 |
| Cadmium | <1.0 | <1.0 | N/A |
| Chromium | 2.7 | 7.9 | N/A |
| Copper | 48 | 6.7 | 86.0 |
| Lead | 110 | <1.0 | >99.0 |
| Nickel | 14 | 7.4 | 47.1 |
| Zinc | 25 | <5.0 | >80.0 |
| | | | |
| Total Heavy Metals* | 209.6 | <30 | >85.7 |
| | | | |
| Selenium | 6.7 | <1.0 | >85.1 |
| Cyanide (total) | 17,000 | <100 | >99.4 |
| Phenol (total) | 180,000 | 39,000 | 78.3 |
| PAH (total) | 7,500 | 6.4 | 99.9 |
| TPH† (total) | 39,000 | 1200 | 96.9 |
| pH | 12.6 | 6.7 | N/A |

| | | | |
|---|---|---|---|
| ^{†}Total Petroleum Hydrocarbons | | | |
| *Sum of the values for arsenic, cadmium, chromium, copper, lead, nickel and zinc | | | |

It is evident from the results in Table 6 that the prime pollutants of concern are cyanides, TPH's, PAII's and phenols. Removal rates for the aforementioned (with the exception of phenols) significantly exceeded the ideal 95 % removal rate. The removal rate for phenol, although satisfactory, did not achieve the minimum ideal target removal rate using the 1 % modified clay addition rate. Higher addition rates should address this issue.

The physical properties of the treated material were also evaluated and the results are as shown in Table 7.

**Table 7:**

| **UCS Values for Treated Samples** | | | | | |
|---|---|---|---|---|---|
| Treatment Mix | Addition Rates (%) | | UCS @ 7 days (kN/m²) | UCS @ 14 days (kN/m²) | UCS @ 28 days (kN/m²) |
| | OPC | Modified Clay | | | |
| 01 | 6 | 1 | <54 | 54 | 54 |
| 02 | 8 | 1 | 54 | 80 | 90 |
| 03 | 10 | 1 | 107 | 134 | 160 |
| 04 | 12 | 1 | 134 | 160 | 188 |
| 05 | 16 | 1 | 188 | 214 | 241 |

The above values were satisfactory using combinations of cementitious materials, in particular OPC, and modified clays. It is expected that binder materials will prove beneficial in terms of physical strength characteristics, either used as a stand-alone additive or as a partial substitute for cement.

Further work was carried out concentrating upon specific pollutants in order to evaluate the treatment capability of the modified clays in isolation for the type of pollutants expected to be encountered within tarry wastes. Manganese and zinc were selected as typical heavy metals and naphthalene and phenol as typical organic compounds. The results recorded for the percentage removal rate of each of the aforementioned pollutants from control stock solutions by modified clays of the type previously described are displayed in Table 8.

**Table 8:**

| **Leachate Results for Samples Treated with Modified Clays** | | | |
|---|---|---|---|
| Analyte (mg/l) | Control | Treated | % Removal |
| | | | |
| Manganese | 1000 | 56 | 94.4 |
| Zinc | 1000 | 69 | 93.1 |
| Naphthalene | 1000 | 0.12 | >99.9 |
| Phenol | 32 | 0.395 | 98.8 |

The above results illustrate the capability of the modified clays when used alone with respect to the chemical stabilisation of both heavy metals and organic compounds. The removal rates achieved illustrate the efficacy of the modified clays and their applicability to the treatment of tarry wastes and the associated contaminants generally contained therein.

The case studies described previously demonstrate the capability of the invention to achieve the desired chemical and physical stability requirements. The invention can be applied using either above ground methodologies or treating within the land as previously described.

The process can be applied for the treatment of tarry waste material using above ground treatment plant. This process will typically involve controlled excavation of the tarry waste material, treatment of said material with modified clays and cementitious materials (and binder materials if deemed appropriate) followed by, in most cases, re-emplacement of the treated material within the repository. It may be acceptable to transfer the treated material to another repository, however this would not be viewed as the most environmentally sustainable solution.

The process can be equally applied for treatment of tarry waste material whilst contained within the land using plant and equipment designed to mix the material in-ground with the modified clays and cementitious materials (and binder materials if deemed appropriate). Reactive barriers incorporating pillared modified clays would be installed using similar plant and equipment.

The treatment process may incorporate a means for fracturing the tarry waste material (should the material be sufficiently brittle), thereby enabling it to be coated with the treatment agent(s). 'I'he treatment process may alternatively incorporate a means of reducing the viscosity of the tarry waste material, thereby enabling it to be homogeneously mixed with the treatment agent(s).

In contaminated land remediation projects involving the treatment of tarry wastes, there is likely to be a complex mixture of both organic and inorganic contaminants contained within the tars. In most cases there is likely to be a combination of solid tars and viscous tars, together with contaminants arising from or in addition to the tarry wastes. In essence, there will be a mix of solid, relatively immobile tars and fluid, potentially mobile tars and pollutants (particularly organic species). It will therefore be necessary to employ, in most cases, a treatment method which combines the advanced chemical and physical stabilisation technology described in the invention with reactive barrier technology which is also described in the invention and in GB 2301133 B.

By employing the invention as described herein, tarry waste materials and residues (including associated pollutants) can be treated to attain improved chemical and physical properties so as to reduce the environmental impact of the waste material. The invention provides a method for treating tarry wastes using advanced chemical and physical stabilisation techniques which is a significant advancement over the prior art.

The features disclosed in the foregoing description and in the accompanying figures, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

### References

1 Consultants in Environmental Sciences Ltd. and Imperial College London, *Production, Treatment & Disposal of Acid Tars in the United Kingdom*, UK Department of the Environment Final Report, 1986.

## Claims

1. A process for treating tarry waste materials and residues which utilises a chemical and physical stabilisation process whereby the said waste material is stabilised using a treatment agent(s) which is selected according to the nature of the tarry waste material undergoing treatment to produce a treated material with improved physical and chemical properties so as to reduce the environmental impact of the material.

2. A process according to Claim 1 wherein the tarry waste material is either acidic or alkaline in nature.

3. A process according to Claim 1 wherein the tarry waste material comprises the core tar material and contaminants arising from, or in addition to, the core material.

4. A process according to Claim 1 wherein the treatment agent(s) includes an active material selected to react with contaminants within the tarry waste material so as to neutralise or destroy the contaminant.

5. A process according to Claim 1 wherein the treatment agent(s) includes a binding material to bind the contaminant(s) and mitigate or prevent physical migration thereof.

6. A process according to Claim 1 wherein said treatment agent(s) comprises one or more active materials selected to react with the contaminant(s) so as to neutralise or destroy the contaminant and one or more binding materials to bind the contaminant(s) and mitigate or prevent physical migration thereof.

7. A process according to Claim 1 whereby the tarry waste material is processed using plant and equipment placed above ground, said plant and equipment having the capability to mix and treat tarry waste material above ground, incorporating the treatment agent(s).

8. A process according to Claim 7 wherein said treatment agent(s) comprises one or more active materials selected to react with the contaminant(s) so as to neutralise or destroy the contaminant and one or more binding materials to bind the contaminant(s) and mitigate or prevent physical migration thereof.

9. A process according to Claim 7 wherein the treatment agent(s) includes a binding material to bind the contaminant(s) and mitigate or prevent physical migration thereof.

10. A process according to Claim 1 whereby the tarry waste material is processed using plant and equipment suitable for mixing into the tarry waste material whilst contained within the land, said plant and equipment having the capability to mix and treat tarry waste material, incorporating the treatment agent(s).

11. A process according to Claim 10 wherein said treatment agent(s) comprises one or more active materials selected to react with the contaminant(s) so as to neutralise or destroy the contaminant and one or more binding materials to bind the contaminant(s) and mitigate or prevent physical migration thereof.

12. A process according to Claim 10 wherein the treatment agent(s) includes a binding material to bind the contaminant(s) and mitigate or prevent physical migration thereof.

13. A process according to Claim 3 wherein the contaminants arising from, or in addition to, the core material are treated by the installation of a reactive barrier system.

14. A process according to Claim 13 wherein the barrier is as described in UK Patent GB 2301133 B.

15. A process according to Claim 4 wherein the treatment agent(s) comprises a modified clay capable of reacting with the selected contaminants within the tarry waste material.

16. A process according to Claim 15 wherein the modified clay is derived from a smectite clay.

17. A process according to Claim 16 wherein the modified clay is a reactive clay as described in UK Patent GB 2302685 and corresponding USA Patent 5827362, European Patent Application 96307987.6 and Australian Patent 727587.

18. A process according to Claim 5 where the binding material addition rate is controlled to minimise the effect of bulking.

19. A process according to Claim 5 wherein the binding agent(s) comprises a cementitious or pozzolanic material.

20. A process according to Claim 19 wherein the cementitious material is Ordinary Portland Cement (OPC).

21. A process according to Claim 19 wherein the cementitious material is a calcium aluminosulfate cement.

22. A process according to Claim 19 wherein the cementitious material is a rapid setting cement, with a low gypsum content.

23. A process according to Claim 5 wherein the binding agent(s) comprises an aggregate material.

24. A process according to Claim 23 wherein the aggregate material is colliery spoil

25. A process according to Claim 7 whereby the above ground plant and equipment provides a means of fracturing the tarry waste material, thereby enabling it to be coated with the treatment agent(s), so as to reduce the environmental impact of the material.

26. A process according to Claim 7 whereby the above ground plant and equipment provides a means of reducing the viscosity of the tarry waste material, thereby enabling it to be homogeneously mixed with the treatment agent(s), so as to reduce the environmental impact of the material.

27. A process according to Claim 10 whereby the mixing process used to treat tarry wastes contained within the land provides a means of fracturing the tarry waste material, thereby enabling it to be coated with the treatment agent(s), so as to reduce the environmental impact of the material.

28. A process according to Claim 10 whereby the mixing process used to treat tarry wastes contained within the land provides a means of reducing the viscosity of the tarry waste material, thereby enabling it to be homogeneously mixed with the treatment agent(s), so as to reduce the environmental impact of the material.

29. A method according to Claim 1 of treating tarry waste material and/or contaminants arising from or in addition to the core tarry waste material comprising the use of a treatment agent(s) as in Claim 4 and/or a binding agent as in Claim 5 and processing plant and equipment as in Claims 7 and/or 10 using a mass treatment approach and/or a barrier system as in Claim 13.

30. A method of treating tarry waste material as described in Claim 29 to produce a material with improved physical and chemical properties so as to reduce the environmental impact of the waste material.
